# EUROPEAN PATENT APPLICATION

(11) **EP 3 793 204 A1**
(43) Date of publication of application: **17.03.2021**
(21) Application number: 19906535.0
(22) Date of filing: 28.03.2019
(51) Int. Cl.: H04N 21/43

(54) **SYNCHRONOUS PLAYING METHOD AND DEVICE FOR VIDEO, AND COMPUTER-READABLE STORAGE MEDIUM**

(30) Priority: 25.12.2018 CN 201811595305
(71) Applicant: Shenzhen Skyworth-RGB Electronic Co., Ltd., Shenzhen, Guangdong 518057 (CN)
(72) Inventor: ZHAN, Zicong, Shenzhen, Guangdong 518057 (CN); LIU, Wei, Shenzhen, Guangdong 518057 (CN)
(74) Representative: Osterhoff, Utz
(86) International application number: PCT/CN2019/079995
(87) International publication number: WO 2020/133766

(57) **Abstract**

Disclosed are a video synchronous playback method and device, and a computer-readable storage medium. The method includes: in a synchronous member mode, sending, by a video playback device, a first video information corresponding to a video currently played back by the video playback device to another video playback device; after receiving a second video information corresponding to a video played back by the another video playback device, determining a target video and a target progress according to the second video information, the video currently played back by the video playback device, and a current playback progress of the video playback device; and playing back according to the target video and the target progress. This realizes the video synchronous playback of the video playback devices with no need for additional severs or playback sources, which reduces the cost and lowers the technical threshold for the video synchronous playback. In addition, multiple video playback devices maintain the playback progress together, thus even if one of them fails, the synchronous playback of the others will not be affected, thereby reducing the risk.

## Description

### CROSS REFERENCE TO RELATED APPLICATIONS

The present disclosure claims the priority to Chinese Patent Application NO. 201811595305.6, filed December 25, 2018 with the National Intellectual Property Administration and entitled "VIDEO SYNCHRONOUS PLAYBACK METHOD AND DEVICE, AND COMPUTER-READABLE STORAGE MEDIUM", the entirety of which is hereby incorporated herein by reference for all purposes.

### TECHNICAL FIELD

The present disclosure relates to the field of internet multimedia, and more particularly relates to a video synchronous playback method and device, and a computer-readable storage medium.

### BACKGROUND

Currently, video synchronous playback of video playback devices such as TVs, computers, and mobile phones in a local area network (LAN) may be performed in the following ways.
1. Adding a playback source: by additionally adding a DVD player or a computer host, and laying audio and video cables, playback content is delivered to other playback devices, so as to realize the video synchronous playback. This way has disadvantages of requiring the playback source machine and related audio and video lines, which incurs additional costs.
2. Adding a LAN server: by additionally adding a server for providing a public access interface, video content currently being played on the server is sent out, and other video playback devices in the LAN receive the current video content via the public interface, whereby realizing the video synchronous playback. This way has disadvantages that the server is needed, resulting in high technical threshold and high risk factor. Once the server fails, the synchronous playback will completely fail.
3. Using a certain video playback device as a playback host: this way may be regarded as a simplified version of the second way, which has no need for an additional server. One of the video playback devices is used as a master to send broadcast notification to the other video playback devices for realizing the video simultaneous playback. This way has disadvantages that once the master device fails, the other devices cannot receive synchronous broadcast, thereby causing failure of the video synchronous playback.

Hence, the existing video synchronous playback ways have disadvantages of high cost, high technical threshold, and high risk factor.

### SUMMARY

It is an object of the present disclosure to provide a video synchronous playback method and device, and a computer-readable storage medium, aiming to solve the problem that the existing video synchronous playback ways have disadvantages of high cost, high technical threshold, and high risk factor.

In one aspect, the present disclosure provides a video synchronous playback method, including the operations:
in a synchronous member mode, sending, by a video playback device, a first video information corresponding to a video currently played back by the video playback device to another video playback device;
after receiving a second video information corresponding to a video played back by the another video playback device, determining a target video and a target progress according to the second video information, the video currently played back by the video playback device, and a current playback progress of the video playback device; and
playing back according to the target video and the target progress.

Optionally, before the operation of in a synchronous member mode, sending, by a video playback device, a first video information corresponding to a video currently played back by the video playback device to another video playback device, the video synchronous playback method further includes:
in an automatic mode, detecting, by the video playback device, whether the second video information is received within a first preset duration; and
if the second video information is received within the first preset duration, in response to detecting that a video file corresponding to the second video information has been saved in the video playback device, playing back the video file at a playback progress in the second video information, and switching to the synchronous member mode.

Optionally, after the operation of in an automatic mode, detecting, by the video playback device, whether the second video information is received within a first preset duration, the video synchronous playback method further includes:
if the second video information is not received within the first preset duration, switching to the synchronous member mode.

Optionally, after the operation of in a synchronous member mode, sending, by a video playback device, a first video information corresponding to a video currently played back by the video playback device to another video playback device, the video synchronous playback method further includes:
in the synchronous member mode, in response to detecting that a target operation is performed on the video playback device, switching to a manual mode; wherein the video playback device in the manual mode neither sends the first video information nor processes the second video information.

Optionally, after the operation of in the synchronous member mode, in response to detecting that a target operation is performed on the video playback device, switching to a manual mode, the video synchronous playback method further includes:
in the manual mode, in response to detecting that a no-operation duration reaches a second preset duration, playing back a preset video, and switching to the automatic mode.

Optionally, the operation of determining a target video and a target progress according to the second video information, the video currently played back by the video playback device, and a current playback progress of the video playback device includes:
detecting whether a video corresponding to the second video information is the same as the video currently played back by the video playback device;
if the video corresponding to the second video information is the same as the video currently played back by the video playback device, determining the video currently played back as the target video; and
determining a faster one of the current playback progress of the video playback device and a playback progress corresponding to the second video information as the target progress.

Optionally, after the operation of detecting whether a video corresponding to the second video information is the same as the video currently played back by the video playback device, the video synchronous playback method includes:
if the video corresponding to the second video information is different from the video currently played back by the video playback device, detecting whether the playback progress corresponding to the second video information and the current playback progress satisfy a preset condition;
if the playback progress corresponding to the second video information and the current playback progress satisfy the preset condition, determining the video corresponding to the second video information as the target video, and determining the playback progress corresponding to the second video information as the target progress; and
if the playback progress corresponding to the second video information and the current playback progress do not satisfy the preset condition, determining the video currently played back as the target video, and determining the current playback progress as the target progress.

Optionally, the operation of in a synchronous member mode, sending, by a video playback device, a first video information corresponding to a video currently played back by the video playback device to another video playback device includes:
in the synchronous member mode, sending, by the video playback device, the first video information corresponding to the video currently played by the video playback device itself to a router that is communicatively connected with the video playback device itself, to allow the router to broadcast the first video information to the another video playback device communicatively connected with the router after receiving the first video information.

In another aspect, the present disclosure provides a video synchronous playback device, including a memory, a processor and a video synchronous playback program stored in the memory and executable by the processor. The video synchronous playback program when being executed by the processor is configured to perform the operations of the video synchronous playback method described above.

In still another aspect, the present disclosure provides a computer-readable storage medium, storing a video synchronous playback program. The video synchronous playback program when being executed by a processor is configured to perform the operations of the video synchronous playback method described above.

In accordance with the present disclosure, the video playback device in the synchronous member mode sends the first video information corresponding to the video currently played back by itself to another video playback device; after receiving the second video information corresponding to the video played back by the another video playback device, the video playback device determines the target video and the target progress according to the second video information, the video currently played back by the video playback device, and the current playback progress of the video playback device; the video playback device plays back according to the target video and the target progress. This realizes the video synchronous playback of the video playback devices with no need for additional severs or playback sources, which reduces the cost and lowers the technical threshold for the video synchronous playback. Besides, multiple video playback devices maintain the playback progress together, thus even if one of them fails, the synchronous playback of the others will not be affected, thereby reducing the risk.

### BRIEF DESCRIPTION OF THE DRAWINGS

FIG. 1 is a structure diagram of hard operating environment involved in an embodiment according to this disclosure.
FIG. 2 is an illustrative flowchart of a first embodiment of a video synchronous playback method according to this disclosure.

The realizing of the aim, functional characteristics and advantages of the present disclosure are further described in detail with reference to the accompanying drawings and the embodiments.

### DETAILED DESCRIPTION OF THE EMBODIMENTS

It will be appreciated that the specific embodiments described herein are merely illustrative of the present disclosure and are not intended to limit the present disclosure.

Since the existing video synchronous playback ways have disadvantages of high cost, high technical threshold, and high risk factor, the present disclosure provides a solution, including: in a synchronous member mode, sending, by a video playback device, a first video information corresponding to a video currently played back by the video playback device to another video playback device; after receiving a second video information corresponding to a video played back by the another video playback device, determining a target video and a target progress according to the second video information, the video currently played back by the video playback device, and a current playback progress of the video playback device; and playing back according to the target video and the target progress. This realizes the video synchronous playback of the video playback devices with no need for additional severs or playback sources, which reduces the cost and lowers the technical threshold for the video synchronous playback. In addition, multiple video playback devices maintain the playback progress together, thus even if one of them fails, the synchronous playback of the others will not be affected, thereby reducing the risk.

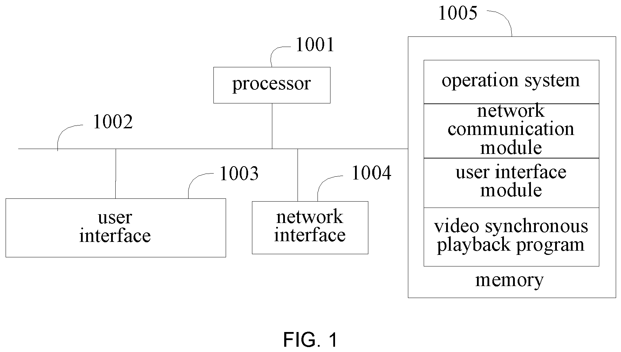

The present disclosure provides a video synchronous playback device. Referring to FIG. 1, FIG. 1 is a structure diagram of hard operating environment involved in an embodiment according to this disclosure.

It should be noted that FIG. 1 shows the structure diagram of hard operating environment of the video synchronous playback device involved in an embodiment. The video synchronous playback device in an embodiment may be a personal computer (PC), or may be a mobile terminal device having a display function, such as a smart phone, a smart television, a tablet computer, a portable computer.

As shown in FIG. 1, the terminal may include: a processor 1001, such as CPU, a network interface 1004, a user interface 1003, a memory 1005, and a communication bus 1002. The communication bus 1002 is configured to facilitate connection and communication between these components. The user interface 1003 may include a display, an input unit such as a keyboard, and an optional user interface 1003 may also include a standard wired interface and wireless interface. The network interface 1004 may optionally include a standard wired interface, and a wireless interface (such as a WI-FI interface). The memory 1005 may be a high-speed RAM memory, or a non-volatile memory such as a disk memory. The memory 1005 optionally may also be a storage device that is separate from the processor 1001 described above.

Additionally or alternatively, the video synchronous playback device may also include a camera, a RF (Radio Frequency) circuit, a sensor, an audio circuitry, a WiFi module, and the like. Those skilled in the art can understand that the structure of the video synchronous playback device shown in FIG. 1 does not constitute a limitation to the video synchronous playback device. The terminal video synchronous playback device may include more or less components than those shown, or combination of some components, or different component arrangements.

As shown in FIG. 1, the memory 1005 as a computer storage medium may include an operation system, a network communication module, a user interface module and a video synchronous playback program.

In the video synchronous playback device shown in FIG. 1, the network interface 1004 is mainly configured to connect a background server and communicate data with the background server; the user interface 1003 is mainly configured to connect the client (user side) and communicate data with the client; and the processor 1001 may be configured to execute the video synchronous playback program stored in the memory 1005 and perform the following operations:
in a synchronous member mode, sending, by a video playback device, a first video information corresponding to a video currently played back by the video playback device to another video playback device;
after receiving a second video information corresponding to a video played back by the another video playback device, determining a target video and a target progress according to the second video information, the video currently played back by the video playback device, and a current playback progress of the video playback device; and
playing back according to the target video and the target progress.

Further, before the operation of in a synchronous member mode, sending, by a video playback device, a first video information corresponding to a video currently played back by the video playback device to another video playback device, the processor 1001 is configured to be able to execute the video synchronous playback program stored in the memory 1005 and perform the following operations:
in an automatic mode, detecting, by the video playback device, whether the second video information is received within a first preset duration; and
if the second video information is received within the first preset duration, in response to detecting that a video file corresponding to the second video information has been saved in the video playback device, playing back the video file at a playback progress in the second video information, and switching to the synchronous member mode.

Further, after the operation of in an automatic mode, detecting, by the video playback device, whether the second video information is received within a first preset duration, the processor 1001 is configured to be able to execute the video synchronous playback program stored in the memory 1005 and perform the following operations:
if the second video information is not received within the first preset duration, switching to the synchronous member mode.

Further, after the operation of in a synchronous member mode, sending, by a video playback device, a first video information corresponding to a video currently played back by the video playback device to another video playback device, the processor 1001 is configured to be able to execute the video synchronous playback program stored in the memory 1005 and perform the following operations:
in the synchronous member mode, in response to detecting that a target operation is performed on the video playback device, switching to a manual mode; wherein the video playback device in the manual mode neither sends the first video information nor processes the second video information.

Further, after the operation of in the synchronous member mode, in response to detecting that a target operation is performed on the video playback device, switching to a manual mode, the processor 1001 is configured to be able to execute the video synchronous playback program stored in the memory 1005 and perform the following operations:
in the manual mode, in response to detecting that a no-operation duration reaches a second preset duration, playing back a preset video, and switching to the automatic mode.

Further, the processor 1001 is configured to be able to execute the video synchronous playback program stored in the memory 1005 and perform the following operations:
detecting whether a video corresponding to the second video information is the same as the video currently played back by the video playback device;
if the video corresponding to the second video information is the same as the video currently played back by the video playback device, determining the video currently played back as the target video; and
determining a faster one of the current playback progress of the video playback device and a playback progress corresponding to the second video information as the target progress.

Further, after the operation of detecting whether a video corresponding to the second video information is the same as the video currently played back by the video playback device, the processor 1001 is configured to be able to execute the video synchronous playback program stored in the memory 1005 and perform the following operations:
if the video corresponding to the second video information is different from the video currently played back by the video playback device, detecting whether the playback progress corresponding to the second video information and the current playback progress satisfy a preset condition;
if the playback progress corresponding to the second video information and the current playback progress satisfy the preset condition, determining the video corresponding to the second video information as the target video, and determining the playback progress corresponding to the second video information as the target progress; and
if the playback progress corresponding to the second video information and the current playback progress do not satisfy the preset condition, determining the video currently played back as the target video, and determining the current playback progress as the target progress.

Further, the processor 1001 is configured to be able to execute the video synchronous playback program stored in the memory 1005 and perform the following operations:
in the synchronous member mode, sending, by the video playback device, the first video information corresponding to the video currently played by the video playback device itself to a router that is communicatively connected with the video playback device itself, to allow the router to broadcast the first video information to the another video playback device communicatively connected with the router after receiving the first video information.

Based on the above hardware structure, various embodiments of the video synchronous playback method are provided.

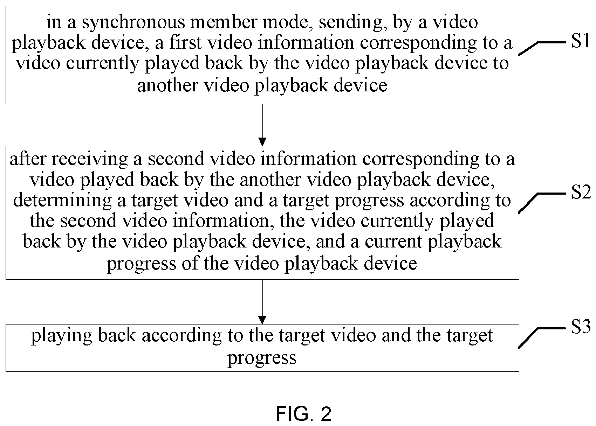

Refer to FIG. 2, the preferred embodiment of the video synchronous playback method of this application provides a video synchronous playback method. It should be noted that although a logical sequence is shown in the flowchart, in some embodiments, the steps shown or described may be in a different order. The synchronous video playback method includes:
Step S1, in a synchronous member mode, sending, by a video playback device, a first video information corresponding to a video currently played back by the video playback device to another video playback device.

The video playback device may be a device capable of playing back videos, such as a smart television, a smart phone, or a computer. The video playback device may be configured with a synchronous member mode. When in the synchronous member mode, the video playback device sends the first video information corresponding to the video currently played back to another video playback device. The first video information may include a file name of the video currently being played back and a current playback progress. The video playback device sending the first video information to another video playback device may be performed in a way that the first video information is directly sent to the another video playback device after the video playback device establishes a communication connection with the another video playback device. For example, a smart phone 1 and a smart phone 2 are connected via Bluetooth. When the smart phone 1 is in the synchronous member mode, the smart phone 1 sends the first video information corresponding to the video currently played back by itself to the smart phone 2. Optionally, the video playback device may send the first video information to a router in communication with it, and the router sends the first video information to another video playback device in communication with the router, which is suitable for the synchronous playback of video playback devices in a same LAN.

In the synchronous member mode, the video playback device sends the first video information, and at the same time receives the second video information from the another video playback device, where the second video information corresponds to the video being played by the another video playback device. That is, in a case where a plurality of video playback devices are in the synchronous member mode, each of the plurality of video playback devices sends the file name and the current playback progress of the video being played back by itself, and at the same time receives the file names and the current playback progresses of the videos being played back by the other video playback devices. In the LAN, when a plurality of video playback devices are already playing back a video synchronously, another video playback device can participate in the synchronous playback by entering the synchronous member mode.

It will be appreciated that the video playback device sends the first video information every preset duration. The preset duration may be set according to needs, such as 5 seconds.

Step S2, after receiving a second video information corresponding to a video played back by the another video playback device, determining a target video and a target progress according to the second video information, the video currently played back by the video playback device, and a current playback progress of the video playback device.

When the video playback device is in the synchronous member mode, after receiving the second video information corresponding to the video played back by another video playback device, the target video and the target progress are determined according to the second video information, the video currently played back by the video playback device itself and the current playback progress of the video playback device itself. The target video refers to a video that needs to be played back. Since the video currently played back by the video playback device itself may be different from the video corresponding to the second video information, the target video may be the video currently being played back or the video corresponding to the second video information. The target progress refers to a progress to be played back, such as 2 minutes. The target progress may be the progress of the video currently being played back, or the playback progress corresponding to the second video information.

Specifically, the video playback device determines whether to switch the video according to the second video information, the video currently being played back by the video playback device itself and the current playback progress of the video playback device itself. If it is determined to switch the video, the video corresponding to the second video information is determined as the target video, and the playback progress corresponding to the second video information is determined as the target progress. If it is determined not to switch the video, the video currently played back is determined as the target video. If it is determined to adjust the playback progress, the progress corresponding to the second video information is determined as the target progress. If it is determined not to adjust the playback progress, the current playback progress is determined as the target progress.

If the video corresponding to the second video information is the same as the video currently played back, there is no need to switch the video. The video playback device compares the playback progress corresponding to the second video information with the current playback progress. If the current playback progress is faster, the current playback progress is determined as the target progress. If the playback progress corresponding to the second video information is faster, the playback progress corresponding to the second video information is determined as the target progress. By this, the video playback devices can always be aligned with the one whose playback progress is the fastest, thereby realizing the playback synchronous.

If the video corresponding to the second video information is different from the video currently played back, it indicates that the video being played back by the video playback device itself is different from the video being played back by the another video playback device sending the second video information. In this case, the video playback device may detect whether the playback progress corresponding to the second video information and the current playback progress satisfy a preset condition. In response to detecting that the preset condition is satisfied, it is determined to switch the video; in response to detecting that the preset condition is not satisfied, it is determined not to switch the video. The preset condition may be configured to allow the video playback devices to eventually play back the same video at the same progress. For example, it may be configured that the playback progress corresponding to the second video information is slower than a preset progress and the current playback progress is faster than the preset progress. The preset progress may be configured according to needs, such as 15 seconds.

It should be noted that the video playback device may also record a timestamp of each alignment, where the alignment refers to switching to the video corresponding to the second video information or adjusting the current progress to the progress corresponding to the second video information. After the video playback device receives the second video information, if the duration from the previous alignment is detected to be less than a first preset duration, the video playback device may continue playing back the current video to reduce the number of alignments of the video playback device based on the second video information, which reserves processing time for a processor of the video playback device, saves resources, and as well as reduces flicker caused by frequent switching. The first preset duration may be set according to needs, such as 5 seconds. Further, it may be configured that when the video currently played back is the same as the video corresponding to the second video information, the second preset duration is relatively long, such as 20 seconds; when the video currently played back is different from the video corresponding to the second video information, the second preset duration is relatively short, such as 5 seconds, so as to reduce the number of alignments of the video playback device while maintaining the synchronous playback. In this case, after receiving the second video information, the video playback device needs to detect whether the video currently played back is the same as the video corresponding to the second video information. It should be noted that the preset duration involved in this embodiment is different from the first preset duration, and is also different from the first and second preset durations involved in the following embodiments.

Step S3, playing back according to the target video and the target progress.

After the video playback device determines the target video and the target progress, if the target video is the video currently being played back and the target progress is the current playback progress, the video playback device continues the playback of the current video, that is, no processing takes place on the current video. If the target video is the video currently being played back and the target progress is the progress corresponding to the second video information, the video playback device adjusts the current playback progress to the progress corresponding to the second video information without switching the video. If the target video is the video corresponding to the second video information, namely, a video different from the video currently played back, the video playback device detects whether the video file corresponding to the second video information has been saved in the video playback device itself. The video playback device may search for the video file according to the file name in the second video information. If the video file is found, the video file is played back and the progress is adjusted to the target progress. Accordingly, the target progress is the progress corresponding to the second video information. If the video file is not found, the video playback device continues the playback of the current video, that is, no processing takes places on the video currently played back.

It should be noted that the video playback device may first detect whether the video file corresponding to the second video information has been saved locally, in response to detecting that the video corresponding to the second video information is not the same as the video currently played back. And if the video file has not been saved, the video playback device continues the playback of the current video, that is, no processing occurs on the current video. Further, in response to detecting that the video file corresponding to the second video information has not been saved, the video playback device may download this video file in case of network connection.

In this embodiment, the video playback device in the synchronous member mode sends the first video information corresponding to the video currently played back by itself to another video playback device; after receiving the second video information corresponding to the video played back by the another video playback device, the video playback device determines the target video and the target progress according to the second video information, the video currently played back by the video playback device, and the current playback progress of the video playback device; the video playback device plays back according to the target video and the target progress. This realizes the video synchronous playback of the video playback devices with no need for additional severs or playback sources, which reduces the cost and lowers the technical threshold for the video synchronous playback. Besides, multiple video playback devices maintain the playback progress together, thus even if one of them fails, the synchronous playback of the others will not be affected, thereby reducing the risk.

Further, based on the above first embodiment, a second embodiment of the video synchronous playback method is provided. In this embodiment, before step S1, the video synchronous playback method also includes:
Step S4, in an automatic mode, detecting, by the video playback device, whether the second video information is received within a first preset duration.

In this embodiment, the video playback device may be configured with the automatic mode. In the automatic mode, the video playback device only receives the second video information sent by another video playback device, but does not send the first video information corresponding to the video currently played back. After entering the automatic mode, the video playback device detects whether the second video information is received within the first preset duration. The first preset duration may be set according to needs, such as 30 seconds.

However, the first preset duration should be greater than the time interval for the video playback device to send the first video information.

Step S5, if the second video information is received within the first preset duration, in response to detecting that a video file corresponding to the second video information has been saved in the video playback device, playing back the video file at a playback progress in the second video information, and switching to the synchronous member mode.

If the video playback device receives the second video information within the first preset duration, it indicates that there exists another video playback device currently in the synchronous member mode and performing the simultaneous playback. In this case, the video playback device detects whether the video file corresponding to the second video information has been saved in the video playback device itself. If the video file has been saved, the video playback device plays back the video file, and adjusts the progress to the progress corresponding to the second video information, that is, the progress is adjusted to be aligned with the playback progress of other video playback devices currently being playing back simultaneously. The video playback device switches to the synchronous member mode, becoming a member of the synchronous playback. If the video file corresponding to the second video information has not been saved, the video playback device cannot participate in the synchronous playback of other video playback devices. In this case, the video playback device stays in the automatic mode. Until it is detected that the video file corresponding to the second video information is saved, the video playback device can participate in the simultaneous playback of other video playback devices.

In this embodiment, by setting the automatic mode, the video playback device can participate in the synchronous playback of the other video playback devices when the other video playback devices are in the synchronous playback mode. For example, a device 1 and a device 2 are in the synchronous member mode and are playing back a video A. A device 3 wants to play back the video A synchronously with the device 1 and the device 2, and accordingly, the device 3 turns on the automatic mode. In this case, the device 1 and the device 2 both send out the video information, thus after the device 3 receives the video information, if it is detected that the corresponding video file has been saved in the device 3, the device 3 plays back the video A, adjusts the progress to the playback progress in the video information, and at the same time switches to the synchronous member mode. As such, the synchronous playback of the device 3 with the device 1 and the device 2 is realized. Since the device 1, the device 2 and the device 3 are in equal position, even if one of the three fails, the synchronous playback of the other two will not be affected.

Further, after step S4, the video synchronous playback method includes:
Step S6, if the second video information is not received within the first preset duration, switching to the synchronous member mode.

Since the first preset duration is greater than the time interval for the video playback device to send the first video information, after the video playback device enters the automatic mode, if it is detected that the second video information is not received within the first preset duration, it indicates that no other video playback device is in the synchronous member mode, and no other video playback device is performing the synchronous playback. In this case, the video playback device may switch to the synchronous member mode. The video playback device sends the first video information corresponding to the video currently played back, and if there exists another video playback device entering the automatic mode, the another video playback device will receive the first video information sent by the video playback device, and then be aligned with the video currently played by the video playback device.

Further, based on the above first or second embodiment, a third embodiment of the video synchronous playback method is provided. In this embodiment, after step S1, the video synchronous playback method also includes:
Step S7, in the synchronous member mode, in response to detecting that a target operation is performed on the video playback device, switching to a manual mode; where the video playback device in the manual mode neither sends the first video information nor processes the second video information.

In the synchronous mode, if a target operation performed on the video playback device is detected, the video playback device switches to the manual mode. The video playback device in the manual mode neither sends the first video information, nor processes the second video information after receiving it. Alternatively, the video playback device in the manual mode may be configured not to receive the second video information. The target operation may be an operation for users to control the video playback device to exit the video playback, or an operation for adjusting the video playback progress, namely an operation of exiting the video playback device from the synchronous playback mode. After detecting the target operation, the video playback device automatically enters the manual mode, and does not participate in the synchronous playback of other video playback devices.

Further, after step S7, the video synchronous playback method includes:
Step S8, in the manual mode, in response to detecting that a no-operation duration reaches a second preset duration, playing back a preset video, and switching to the automatic mode.

After entering the manual mode, the video playback device detects whether the no-operation duration reaches the second preset duration. If the no-operation duration reaches the second preset duration, the video playback device plays the preset video and switches to the automatic mode. The second preset duration may be set according to needs, such as 30 seconds. The preset video may be a video randomly selected by the video playback device in its video playlist, or may be the first video in the video playlist.

Further, the video playback device may be configured with a synchronous mode switch. When users want the video playback device to participate in the synchronous playback, the synchronous mode switch may be turned on.

After the synchronous mode is turned on, the video playback device enters the manual mode. According to this, the video playback device displays a synchronous mode setting interface, namely playing back no video. In the manual mode, the video playback device neither sends video information nor receives video information. After entering the manual mode, it is detected that whether the no-operation duration reaches the second preset duration. If the no-operation duration reaches the second preset duration, it indicates that the video playback device has not been operated for a long time. In this case, the video playback device selects a video in the playlist to play back, and automatically switches to the automatic mode.

After entering the automatic mode, the video playback device starts to detect whether the video information is received. If the video information is received within the first preset duration, it indicates that other video playback devices are in the synchronous member mode and currently playing back synchronously. In this case, after detecting that the video file corresponding to the video information has been saved in the video playback device itself, the video playback device plays back the video file, adjusts the progress to the playback progress corresponding to the video information, and switches to the synchronous member mode. If the video information is not received within the second preset duration, it indicates that no other video playback device is in the synchronous member mode, and accordingly the video playback device continues playing back the current video, and switches to the synchronous member mode.

In the synchronous member mode, the video playback device sends out the video information corresponding to the video currently played back. After receiving the video information sent by another video playback device, the video playback device determines the target video and target progress according to the video currently played back, the current playback progress and the video information sent by other video playback devices. Then the video playback device plays back according to the target video and target progress. When in the synchronous member mode, if the video playback device finishes one video, a next video in the video playlist may be automatically played back.

In the synchronous member mode, if the target operation performed on the video playback device is detected, the video playback device automatically switches to the manual mode. The above synchronous playback solution in this embodiment may be applied to television stores, so as to provide automatic video synchronous playback of all televisions without manual participation. Only one switch is required to turn on the synchronous mode for realizing the video synchronous playback. In addition, in a case where a user operates one television, this one television exiting the synchronous playback will not affect the synchronous playback of other televisions. And if no operation is made to this television for a duration, this television will automatically resume the synchronous playback with the other televisions.

It will be appreciated that, there may be a condition that when the video playback device is in the synchronous member mode, a user operates the video playback device to make it enter the manual mode and then play back a video. In order to prevent the video playback device from entering the automatic mode when the no-operation duration reaches the preset duration, it may be configured that when the video playback device is in the manual mode, if the no-operation duration is detected to reach the preset duration and no video is currently being played back, the video playback device switches to the automatic mode.

Further, based on the above first, second or third embodiment, a fourth embodiment of the video synchronous playback method is provided. In this embodiment, step S2 includes:
Step S21, detecting whether a video corresponding to the second video information is the same as the video currently played back by the video playback device.

In the synchronous member mode, after the video playback device receives the second video information sent by other video playback devices, the video playback device detects whether the video corresponding to the second video information is the same as the video currently played back by the video playback device itself.

Step S22, if the video corresponding to the second video information is the same as the video currently played back by the video playback device, determining the video currently played back as the target video.

If the video corresponding to the second video information is detected to be the same as the video currently played back by the video playback device itself, it indicates that the video playback device does not need to switch the video. In this case, the video playback device determines the video currently played back as the target video.

Step S23, determining a faster one of the current playback progress of the video playback device and a playback progress corresponding to the second video information as the target progress.

The video playback device compares the current playback progress of the video playback device itself with the playback progress corresponding to the second video information. If the current playback progress of the video playback device itself is fast, there is no need to adjust the current progress. If the current playback progress of the video playback device itself is slow, the current playback progress needs to be aligned with the playback progress corresponding to the second video information. Thus, the video playback device determines the faster one of the current playback progress of the video playback device and the playback progress corresponding to the second video information as the target progress. Further, if the current playback progress of the video playback device is the same as the playback progress corresponding to the second video information, the current playback progress of the video playback device is determined as the target progress. It may be configured that if the difference between the current playback progress of the video playback device and the playback progress corresponding to the second video information is not greater than a preset number of seconds, the current playback progress of the video playback device itself is determined to be the same as the playback progress corresponding to the second video information. The preset number of seconds may be set according to needs, such as 2 seconds.

Further, after step S21, the video synchronous playback method includes:
Step S24, if the video corresponding to the second video information is different from the video currently played back by the video playback device, detecting whether the playback progress corresponding to the second video information and the current playback progress satisfy a preset condition.

If the video playback device detects that the video corresponding to the second video information is different from the video currently played back by the video playback device itself, it indicates that the video played back by the video playback device is different from the video played back by other video playback devices. It may be that the video playback device has finished the current video and switched to a new video, but the other video playback devices have not switched to a new one; or, the other video playback devices have switched to a new video, but the video playback device has not switched to a new one; or, the video playback device and the other video playback devices switch to new videos almost simultaneously, but the switched new videos are different. If the other video playback devices have switched to the new video, but the video playback device has not yet switched to the new one, it indicates that the video playback device has a slower playback progress and needs to be consistent with the other video playback devices. If the video playback device and the other video playback devices have switched to new videos almost the same time, but the switched new videos are different, the video playback device may switch to play back the video corresponding to the second video information in response to determining that the current playback progress is slower than the playback progress corresponding to the second video information. That is, in a case where the video playback devices switch to different new videos, the video playback devices should be aligned with the one with the fastest playback progress. In this case, the video playback device may detect whether the playback progress corresponding to the second video information and the current playback progress satisfy the preset condition. The preset condition may be configured as follows: the playback progress corresponding to the second video information is slower than the preset progress, and the current playback progress is not slower than the preset progress; or, the playback progress corresponding to the second video information and the current playback progress are both slower than the preset progress, and the playback progress corresponding to the second video information is faster than the current playback progress. The preset progress can be set according to needs, such as 15 seconds.

Step S25, if the playback progress corresponding to the second video information and the current playback progress satisfy the preset condition, determining the video corresponding to the second video information as the target video, and determining the playback progress corresponding to the second video information as the target progress.

If the playback progress corresponding to the second video information and the current playback progress satisfy the preset condition, it indicates that the video corresponding to the second video information is newly switched, and the playback of the video playback device is delayed; or, the video playback device and other video playback devices switch to new videos almost simultaneously, but the switched new videos are different, and the current playback progress of the video playback device is slower than the playback progress corresponding to the second video information. In this case, the video playback device need to switch to the video corresponding to the second video information, and adjust the current progress to the progress corresponding to the second video information. Thus, the video playback device determines the progress corresponding to the second video information as the target progress, and determines the video corresponding to the second video information as the target video.

Step S26, if the playback progress corresponding to the second video information and the current playback progress do not satisfy the preset condition, determining the video currently played back as the target video, and determining the current playback progress as the target progress.

If the playback progress corresponding to the second video information and current playback progress do not satisfy the preset condition. That is, the playback progress corresponding to the second video information is not slower than the preset progress, or the current playback progress is slower than the preset progress. In this case, the video playback device does not switch the video, and continues playing back the current video. In other words, the video playback device determines the current playback progress as the target progress, and the video currently played back as the target video.

Further, in response to detecting that the video corresponding to the second video information is different from the video currently played back by the video playback device itself, the video playback device may first detect whether the video file corresponding to the second video information has been saved in the video playback device itself. If the video file has not been saved, it may be directly determined not to switch the video, namely, determining the video currently played back as the target video, and determining the current playback progress as the target progress. If the video file has been saved, the video playback device then determines whether to switch the video.

This embodiment allows automatic and quick synchronous playback of the video playback devices in the synchronous member mode.

Further, based on the above-described first, second, third or fourth embodiment, a fifth embodiment of the video synchronous playback method is provided. In this embodiment, step S1 includes:
Step S11, in the synchronous member mode, sending, by the video playback device, the first video information corresponding to the video currently played by the video playback device itself to a router that is communicatively connected with the video playback device itself, to allow the router to broadcast the first video information to the another video playback device communicatively connected with the router after receiving the first video information.

The video playback device is communicatively connected with the router in the local area network, and the router is also communicatively connected to other video playback devices. The video playback devices communicatively connected to the router can realize the video synchronous playback via the router. In the synchronous member mode, the video playback device sends the first video information corresponding to the video currently played back by the video playback device itself to the router. After the router receives the first video information, the router broadcasts the first video information to other video playback devices.

This embodiment realizes decentralized video synchronous playback of the video playback devices in the local area network.

The present disclosure also provides a computer-readable storage medium, storing a video synchronous playback program. The video synchronous playback program when being executed by a processor performs the steps of the video synchronous playback method described above.

It's to be clarified that the term "include", "comprise" or any other variants thereof is intended to encompass a non-exclusive inclusion, such that a process, method, device, or system including a series of elements not only includes those elements, but also includes other elements that are not explicitly listed, or elements that are inherent to such a process, method, device, or system. In the absence of more restrictions, an element defined by the phrase "including one ..." does not exclude the existence of additional identical elements in the process, method, device, or system that includes the element.

The numbers of the embodiments according to the present disclosure are merely for description, and do not represent for the advantages and disadvantages of the embodiments.

According to the description of the above-mentioned embodiments, the skilled in the art can clearly understand that the method of embodiments above may be implemented by means of software plus a necessary general hardware platform, of course, also by means of hardware, but in many cases the former is a better implementation. Based on the understanding, the technical solution of the present disclosure can be embodied in the form of a software product in essence or in part contributing to the prior art. The software product is stored in a storage medium (such as a ROM/RAM, a magnetic disk, an optical disk) as described above, including a plurality of instructions for causing a terminal device (which may be a mobile phone, a computer, a server, an air conditioner, or a network device, and so on.) to execute the method described in various embodiments according to the present disclosure.

The foregoing are only illustrative embodiments in accordance with the present disclosure and therefore not intended to limit the patentable scope of the present disclosure. Any equivalent structure or flow transformations that are made taking advantage of the specification and accompanying drawings of the disclosure and any direct or indirect applications thereof in other related technical fields are within the protection scope of the present disclosure.

## Claims

1. A video synchronous playback method, **characterized by** comprising:
in a synchronous member mode, sending, by a video playback device, a first video information corresponding to a video currently played back by the video playback device to another video playback device;
after receiving a second video information corresponding to a video played back by the another video playback device, determining a target video and a target progress according to the second video information, the video currently played back by the video playback device, and a current playback progress of the video playback device; and
playing back according to the target video and the target progress.

2. The video synchronous playback method according to claim 1, **characterized in that** before the operation of in a synchronous member mode, sending, by a video playback device, a first video information corresponding to a video currently played back by the video playback device to another video playback device, the video synchronous playback method further comprises:
in an automatic mode, detecting, by the video playback device, whether the second video information is received within a first preset duration; and
if the second video information is received within the first preset duration, in response to detecting that a video file corresponding to the second video information has been saved in the video playback device, playing back the video file at a playback progress in the second video information, and switching to the synchronous member mode

3. The video synchronous playback method according to claim 2, **characterized in that** after the operation of in an automatic mode, detecting, by the video playback device, whether the second video information is received within a first preset duration, the video synchronous playback method further comprises:
if the second video information is not received within the first preset duration, switching to the synchronous member mode.

4. The video synchronous playback method according to claim 2, **characterized in that** after the operation of in a synchronous member mode, sending, by a video playback device, a first video information corresponding to a video currently played back by the video playback device to another video playback device, the video synchronous playback method further comprises:
in the synchronous member mode, in response to detecting a target operation performed on the video playback device, switching to a manual mode;
wherein the video playback device in the manual mode neither sends the first video information nor processes the second video information.

5. The video synchronous playback method according to claim 4, **characterized in that** after the operation of in the synchronous member mode, in response to detecting a target operation performed on the video playback device, switching to a manual mode, the video synchronous playback method further comprises:
in the manual mode, in response to detecting that a no-operation duration reaches a second preset duration, playing back a preset video, and switching to the automatic mode.

6. The video synchronous playback method according to claim 1, **characterized in that** the operation of determining a target video and a target progress according to the second video information, the video currently played back by the video playback device, and a current playback progress of the video playback device comprises:
detecting whether a video corresponding to the second video information is the same as the video currently played back by the video playback device;
if the video corresponding to the second video information is the same as the video currently played back by the video playback device, determining the video currently played back as the target video; and
determining a faster one of the current playback progress of the video playback device and a playback progress corresponding to the second video information as the target progress.

7. The video synchronous playback method according to claim 6, **characterized in that** after the operation of detecting whether a video corresponding to the second video information is the same as the video currently played back by the video playback device, the video synchronous playback method comprises:
if the video corresponding to the second video information is different from the video currently played back by the video playback device, detecting whether the playback progress corresponding to the second video information and the current playback progress satisfy a preset condition;
if the playback progress corresponding to the second video information and the current playback progress satisfy the preset condition, determining the video corresponding to the second video information as the target video, and determining the playback progress corresponding to the second video information as the target progress; and
if the playback progress corresponding to the second video information and the current playback progress do not satisfy the preset condition, determining the video currently played back as the target video, and determining the current playback progress as the target progress.

8. The video synchronous playback method according to claim 1, **characterized in that** the operation of in a synchronous member mode, sending, by a video playback device, a first video information corresponding to a video currently played back by the video playback device to another video playback device comprises:
in the synchronous member mode, sending, by the video playback device, the first video information corresponding to the video currently played by the video playback device to a router that is communicatively connected with the video playback device, to allow the router to broadcast the first video information to the another video playback device communicatively connected with the router after receiving the first video information.

9. A video synchronous playback device, **characterized by** comprising a memory, a processor, and a video synchronous playback program stored in the memory and executable by the processor, the video synchronous playback program when being executed by the processor performing the following operations:
in a synchronous member mode, sending, by a video playback device, a first video information corresponding to a video currently played back by the video playback device to another video playback device;
after receiving a second video information corresponding to a video played back by the another video playback device, determining a target video and a target progress according to the second video information, the video currently played back by the video playback device, and a current playback progress of the video playback device; and
playing back according to the target video and the target progress.

10. The video synchronous playback device according to claim 9, **characterized in that** the video synchronous playback program when being executed by the processor perform is further configured to perform the following operations:
in an automatic mode, detecting, by the video playback device, whether the second video information is received within a first preset duration; and
if the second video information is received within the first preset duration, in response to detecting that a video file corresponding to the second video information has been saved in the video playback device, playing back the video file at a playback progress in the second video information, and switching to the synchronous member mode.

11. The video synchronous playback device according to claim 10, **characterized in that** the video synchronous playback program when being executed by the processor perform is further configured to perform the following operations:
if the second video information is not received within the first preset duration, switching to the synchronous member mode.

12. The video synchronous playback device according to claim 10, **characterized in that** the video synchronous playback program when being executed by the processor perform is further configured to perform the following operations:
in the synchronous member mode, in response to detecting that a target operation is performed on the video playback device, switching to a manual mode; wherein the video playback device in the manual mode neither sends the first video information nor processes the second video information.

13. The video synchronous playback device according to claim 12, **characterized in that** the video synchronous playback program when being executed by the processor perform is further configured to perform the following operations:
in the manual mode, in response to detecting that a no-operation duration reaches a second preset duration, playing back a preset video, and switching to the automatic mode.

14. The video synchronous playback device according to claim 9, **characterized in that** the video synchronous playback program when being executed by the processor perform is further configured to perform the following operations:
detecting whether a video corresponding to the second video information is the same as the video currently played back by the video playback device;
if the video corresponding to the second video information is the same as the video currently played back by the video playback device, determining the video currently played back as the target video; and
determining a faster one of the current playback progress of the video playback device and a playback progress corresponding to the second video information as the target progressdetermining a faster one of the current playback progress of the video playback device and a playback progress corresponding to the second video information as the target progress.

15. A computer-readable storage medium, **characterized by** storing a video synchronous playback program, the video synchronous playback program when being executed by a processor performing the following operations:
in a synchronous member mode, sending, by a video playback device, a first video information corresponding to a video currently played back by the video playback device to another video playback device;
after receiving a second video information corresponding to a video played back by the another video playback device, determining a target video and a target progress according to the second video information, the video currently played back by the video playback device, and a current playback progress of the video playback device; and
playing back according to the target video and the target progress.
